# EUROPEAN PATENT APPLICATION

(11) **EP 0 692 415 A1**
(43) Date of publication of application: **17.01.1996**
(21) Application number: 95304902.0
(22) Date of filing: 13.07.1995
(51) Int. Cl.: B60S 1/40

(54) **Pivot joint**

(30) Priority: 15.07.1994 GB 9414317
(71) Applicant: TRICO LIMITED, Gwent NP4 0XZ, Wales (GB)
(72) Inventor: Palfrey, John William, Argoed, Blackwood, Gwent NP2 0HB (GB)
(74) Representative: Pedder, James Cuthbert

(57) **Abstract**

A pivot joint is provided for pivotally connecting a wiper arm (1) into an aperture (17) in the main yoke or lever (3) of a windscreen wiper blade. The aperture (17) in the main yoke or lever (3) has two parallel side walls (19, 21)defining opposite sides of the aperture (17) and having a pair of coaxial holes (27), one in each side wall (19, 21). The joint comprises a connector (5) having a pair of trunnions (31) pivotally insertable into the coaxial holes (27) and movable between a first spaced position in which they are located in the holes (27) and a second position in which they are moved towards each other so as to be free of the holes (27) for assembly and disassembly purposes. The connector (5) has means for attachment to a wiper arm (1). The arrangement is such that when the wiper arm (1) is attached to the connector (5), the trunnions (31) are locked in their first position so that disconnection of the connector (5) from aperture (17) is impossible.

## Description

This invention relates to a pivot joint for connecting the wiper arm of a windscreen wiper with the wiper blade harness.

Most modern windscreen wipers comprise a wiper arm and a wiper blade pivotally connected together by means of a connector. The wiper arm is driven in a rotary oscillating movement, which movement is transmitted through the connector to the blade to cause it to move back and forth across an arcuate segment of the windscreen. The wiper blade usually comprises a harness consisting of a number of yokes or levers which are pivotally connected together and carry the wiper rubber. The arrangement of the harness is such that the blade rubber can move towards and away from the windscreen in order to allow the blade rubber to follow the windscreen curvature so provide a good wipe.

The arm is connected to the blade by means of a connector which has a pivotal connection to the primary yoke or lever of the blade harness and a non movable connection with the end or termination of the wiper arm.

Many different types of connector have been proposed over the years. Usually the connector is located in an aperture in the main yoke or lever and is fixed relative thereto by means of a rivet which passes across the aperture in the main harness. However, such an arrangement is relatively costly because it requires the presence of the rivet and the fact that an additional operation is necessary in order to assemble the rivet to the windscreen wiper blade.

Thus, the present invention seeks to provide a pivot joint, and in particular, a connector for a pivot joint, in which some or all of the above disadvantages are obviated or reduced.

According to the invention, there is provided a pivot joint for pivotally connecting a wiper arm into an aperture in the main yoke or lever of a windscreen wiper blade, the aperture in the main yoke or lever having two parallel side walls defining opposite sides of the aperture and having a pair of coaxial holes, one in each side wall, the joint comprising a connector having a pair of trunnions pivotally insertable into the coaxial holes and movable between a first spaced position in which they are located in the holes and a second position in which they are moved towards each other so as to be free of the holes for assembly and disassembly purposes and having means for attachment to a wiper arm, the arrangement being such that when the wiper arm is attached to the connector, the trunnions are locked in their first position so that disconnection of the connector from aperture is impossible.

Preferably the trunnions are biased towards their first position, for example as a result of the resiliency of the material of which the connector is made.

The connector may comprise a generally rigid body portion with extending tongues carrying the trunnions. The parts of the connector carrying the trunnions may be spaced apart a distance to enable a wiper arm to pass between them, the arrangement being such that the arm, in use is positioned so as to prevent movement of these parts towards each other.

Guides may be provided in the connector which extend internally around the location of the trunnions to receive the hook of a hook type wiper arm termination.

The invention will now be described in greater detail by way of example, with reference to the drawings, in which:-
Figure 1 is a perspective exploded view of one form of pivot joint in accordance with the invention;
Figure 2 is a side view of a connector used in the pivot joint of figure 1;
Figure 3 is an underneath plan view of the connector of figure 2;
Figure 4 is an end view of the connector of figures 2 and 3 taken in the direction of the arrow IV;
Figure 5 is a sectional view of the connector taken on the line V - V of figure 4, and
Figure 6 is a sectional view of the completed joint taken on the same line V - V as figure 5.

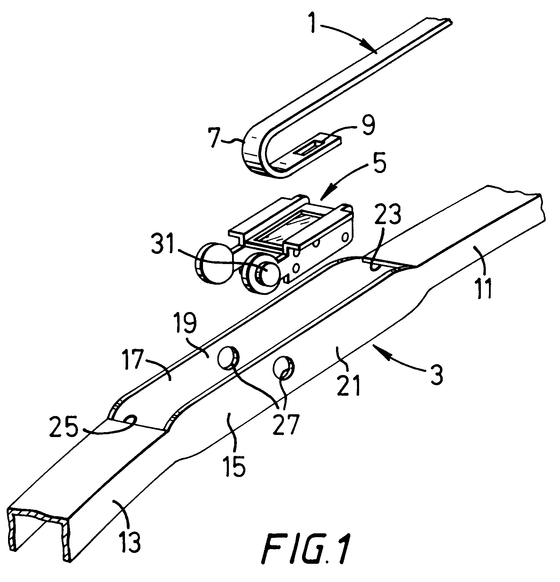

Referring to figure 1 of the drawings, there is shown in perspective exploded view one form of pivot joint in accordance with the invention.

It comprises a wiper arm, the end of which is shown at 1, the main yoke of a windscreen wiper blade, the central part of which is shown at 3, and a connector 5 used to provide a pivotal connection between the arm 1 and the main yoke 3.

The arm 1 is of a well known form which ends in a hook portion 7, the shorter arm of the hook 7 having a retaining aperture 9 for retention of the arm on the connector 5 as will be described hereafter.

The main yoke 3 of the wiper blade is also of generally known construction, comprising a generally channel shaped parts 11 and 13 joined together by a central portion 15. The central portion 15 is provide with an aperture 17in which the connector 5 is adapted to sit, the aperture 17 being defined by extended side walls 19 and 21 of the main yoke 3 and the longitudinal ends of the aperture are defined by the ends 23 and 25 of the base of the channel of the channel shaped parts 11 and 13. The only real difference between the main yoke shown and known yokes lies in the fact that where the aperture would have a cross rivet, this is omitted and the positions of the ends of the cross rivet are formed with holes 27 to receive trunnions 31 on the connector 5 as will be described.

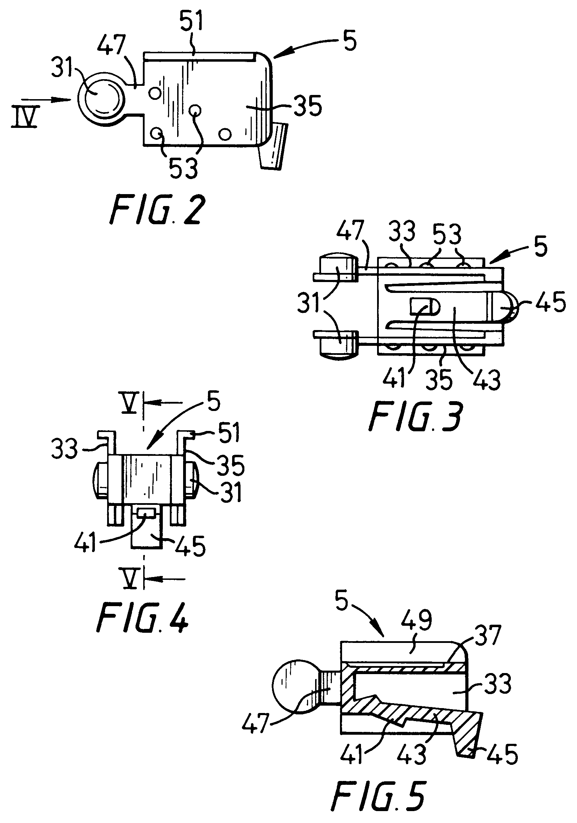

Referring now particularly to figures 2 to 5, the connector 5 is generally of channel shape with two side walls 33 and 35 and an upper or base part 37. The side walls 33 and 35 of the connector 5 are intended to lie between the side walls 19 and 21 of the main yoke 3. The mouth f the channel has situated in it a detent 41 carried by a spring tongue 43 which cooperates with the aperture 9 of the arm 1 to secure the arm 1 to the connector 5. The tongue 43 has an actuating member 45 by means of which the operation of the detent 41 is controlled to enable the arm 1 to be disconnected from the connector 5.

Extending forwardly (or to the left in figures 2, 3 and 5) are a pair of resilient tongues 47 each of which carries at its end a trunnion 31 which cooperates with the holes 27 in the main yoke 3. A further, shallow channel 49 is formed in the base part 37 to provide guidance for the arm hook 7. The edges of this shallow channel extend outwardly to form ribs 51 which, in use, engage the top edges of the side walls 19 and 21 of the main yoke 3 to restrict the amount of rotation of the connector 5 relative to the main yoke. Small projections 53 are formed on the side walls 33 and 35 of the connector 5 so as to take up any play between the connector 5 and the main yoke 3.

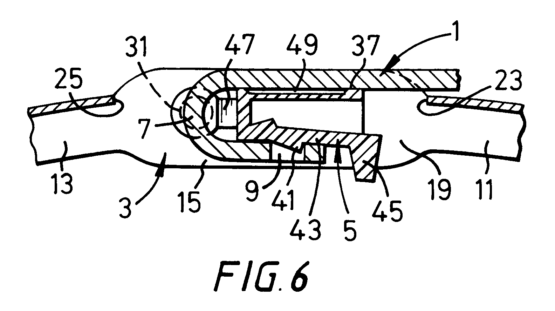

The use of the above described pivot joint in connecting and disconnecting the arm 1 to an from the main yoke 3 with particular reference to figures 1 and 6:

Firstly, to assemble the arm 1 to the yoke 3, the connector 5 is pushed into the aperture 17 in the yoke in such a way that the trunnions 31 on the connector are aligned with the holes 27 in the yoke 3. Because the spacing of the trunnions 31 is greater than the width of the aperture 17, the trunnions 31 will be pushed towards each other and will move out again and into the holes 27, thus securing the connector 5 in a pivotal connection to the main yoke 3.

Then, the rear or right hand end of the connector 5 is raised. The hook 7 of the arm 1 is inserted in front of the connector 5 and pulled backwardly along the connector until it takes up the position shown in figure 6 with the detent 41 lying in the aperture 9. It will be seen that, in this position, the hook 7 lies between the tongues carrying the trunnions 31 and thus prevents the tongues from being flexed inwards to disengage the trunnions 31 from the holes 27 and thus release the connector 5 from the main yoke 3 while the arm 1 is in position.

To disengage the parts, a generally reverse process is adopted. Thus, the actuating member 45 on the connector 5 is raised to raise the detent 41 out of the aperture 9 in the arm 1, thus freeing the arm which can then be slid forward and removed.

The trunnions 31 are then pushed inwardly to clear the holes 27 in the main yoke 3, thus releasing the connector 5 which can then be pulled out of the aperture 17 of the main yoke 3.

It will be appreciated that various modifications may be made to the described embodiment without departing from the scope of the invention. For example, although use with a hook type arm termination has been described, other sorts of arm termination can be used, the only criterion being that a part of the arm is located in a position to block withdrawal of the trunnions of the connector from the holes in the main yoke.

Where the sides of the connector are particularly flexible, the trunnions may be mounted directly on the sides, the resilient tongues being dispensed with.

## Claims

1. A pivot joint for pivotally connecting a wiper arm (1) into an aperture (17) in the main yoke or lever (3) of a windscreen wiper blade, the aperture (17) in the main yoke or lever (3) having two parallel side walls (19, 21) defining opposite sides of the aperture (17) and having a pair of coaxial holes (27), one in each side wall (19, 21), characterised in that the joint comprising a connector (5) having a pair of trunnions (31) pivotally insertable into the coaxial holes (27) and movable between a first spaced position in which they are located in the holes (27) and a second position in which they are moved towards each other so as to be free of the holes (27) for assembly and disassembly purposes and having means (41, 43, 45) for attachment to a wiper arm (1), the arrangement being such that when the wiper arm (1) is attached to the connector (5), the trunnions (31) are locked in their first position so that disconnection of the connector (5) from aperture (17) is impossible.

2. A pivot joint as claimed in claim 1, characterised in that the trunnions (31) are biased towards their first position.

3. A pivot joint as claimed in claim 2, characterised in that the trunnions (31) are biassed as a result of the resiliency of the material of which the connector (5) is made.

4. A pivot joint as claimed in any one of claims 1 to 3, characterised in that the connector (5) comprises a generally rigid body portion with extending tongues (47) carrying the trunnions (31).

5. A pivot joint as claimed in any one of claims 1 to 4, characterised in that the parts (47) of the connector (5) carrying the trunnions are spaced apart a distance to enable a wiper arm (1) to pass between them, the arrangement being such that the arm (1), in use is positioned so as to prevent movement of these parts (47) towards each other.

6. A pivot joint as claimed in claim 5, characterised in that guides (37) are provided in the connector (5) which extend internally around the location of the trunnions (31) to receive the hook (7) of a hook type wiper arm termination.
